# EUROPEAN PATENT SPECIFICATION

(11) **EP 0 599 331 B1**
(45) Date of publication and mention of the grant of the patent: **12.03.1997**
(21) Application number: 93119059.9
(22) Date of filing: 25.11.1993
(51) Int. Cl.: H02K 41/02, B66B 11/04

(54) **Elevator driven by linear motor**
Aufzugsantrieb mittels eines Linearinduktionsmotors
Ascenceur propulsé par un moteur linéaire

(30) Priority: 25.11.1992 FI 925337
(43) Date of publication of application: 01.06.1994
(73) Proprietor: KONE OY, 00330 Helsinki 33 (FI)
(72) Inventor: Hakala, Harri, SF-05830 Hyvinkää (FI)
(74) Representative: Zipse + Habersack

(56) References cited:
- FR-A- 2 278 193
- US-A- 3 954 037
- US-A- 4 402 386
- US-A- 4 803 387
- US-A- 5 062 501

## Description

The present invention relates to an elevator according to the introductory part of claim 1.

The operating power of an elevator is generally obtained from a rotating electromotor, used to drive an elevator car suspended on a hoisting rope. The hoisting rope passes via a traction sheave rotated by the electromotor and possibly via deflecting pulleys, a counterweight being suspended at the other end of the hoisting rope. The electromotor is coupled either directly or via a gear to the shaft of the traction sheave. The elevator machine, i.e. the electromotor, gear and possibly the operating system of the electromotor, as well as the elevator control unit are placed in a separate space, a machine room, which is normally built on top of the elevator shaft.

Another alternative is to use a linear motor. For example, US publication 5,062,501 presents an elevator in which the primary circuit of a linear motor is placed in the counterweight of the elevator while a secondary part forming the secondary circuit of the linear motor and having a length equal to that of the shaft is mounted in the elevator shaft. When a linear motor is used, no separate space for the elevator machine need be provided on top of the shaft because this solution only requires a diverting pulley over which the hoisting rope runs. Linear motors have been proposed and used in many other applications in which a substantially rectilinear motion has to be achieved.

A problem with equipment using a linear motor is the mounting and supporting of the long secondary component. The secondary circuit is normally composed of several successive elements joined together and suitably attached to supporting structures. For example in an elevator, the secondary part may have a length of several tens of metres, which makes it difficult to assemble and install the secondary part on site in the elevator shaft. On the other hand, in elevator applications, the linear motor should not occupy too much of the cross-sectional area of the elevator shaft, because otherwise the space saved through the omission of a machine room would be wasted in the elevator shaft. In a tall building, even a slight increase in the cross-sectional area of the shaft may take up more floor area than a machine room.

The object of the invention is to create a new elevator operated by a linear motor whose secondary circuit is easy to install in the shaft and occupies only a minimal portion of its cross-sectional area. To achieve this, the invention is characterized by the features presented in the characterization part of claim 1. Advantageous embodiments of the invention are subject matter of the subclaims.

The solution of the invention permits easy production of long secondary components for linear motors in elevators. The flexible band-like secondary circuit can be manufactured as a full-length component in the factory and rolled up for transport. Installation of the secondary component in the elevator shaft is easy as there is no need to join successive parts together but the band is only attached by its ends to supporting structures. The flat structure of the band does not take up any extra space in the depthwise direction of the shaft, and the motor can be accommodated within the counterweight. In an application where the secondary component of the linear motor is fitted between the two halves of a split stator, the secondary component is light as it is possible to use a construction without an iron circuit.

In the following, the invention is described in detail by the aid of some of its embodiments, referring to the drawings, in which
- Figure 1 presents an elevator according to the invention, in perspective view,
- Figure 2 presents a linear motor construction according to the invention,
- Figure 3 presents another linear motor construction according to the invention,
- Figure 4 presents the guides provided between the primary and secondary circuits.

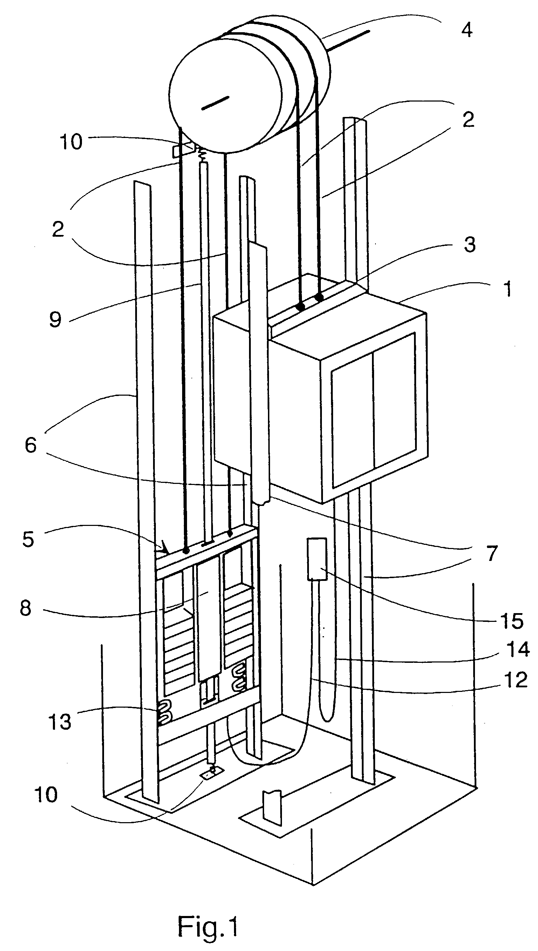

As shown in fig. 1, the elevator car 1, supported by hoisting ropes 2, travels in an elevator shaft. The hoisting ropes 2 are attached to the overhead beam 3 of the car frame supporting the elevator car. The hoisting ropes pass over a deflecting pulley 4 mounted in the upper part of the elevator shaft, the other end of the ropes being attached to a counterweight 5. The elevator shaft is provided with guide rails 6 and 7 for the elevator car 1 and the counterweight 5. The guides of the car and counterweight lean against the guide rails, preventing their lateral motion.

Fitted in the counterweight is the primary winding 8 of the linear motor. The primary winding is manufactured as a double structure, so that the motor has separate windings on the side facing the shaft wall and on the side facing the elevator car. Between the two halves of the primary winding there is an air gap extending vertically through the counterweight, the band-like secondary winding being so fitted that it runs through this air gap. The band 9 forming the secondary winding of the motor is attached with elastic fixing elements 10 to the top and bottom of the shaft, so that the secondary component always remains tensioned to a suitable tightness. In this case the secondary component is so mounted that it runs centrally through the counterweight, the hoisting ropes being placed on either side of it. Other alternatives regarding the placement of the secondary winding are also possible within the framework of the invention.

The counterweight 5 is provided with magnetic brakes 13. Via a cable 12 attached to the counterweight, the primary winding of the motor is linked with an elevator control unit interface 15 provided in the shaft wall. The elevator car is likewise connected to the interface 15 via a trailing cable 14. The power required by the primary side of the linear motor is supplied via cable 12 and the motor is controlled by a motor drive system placed in the elevator control unit. The linear motor is an induction motor, in which the primary winding induces a short-circuit current in the secondary windings. The speed of the motor is adjusted by varying the supply frequency and/or voltage of the frequency converter or inverter feeding the motor.

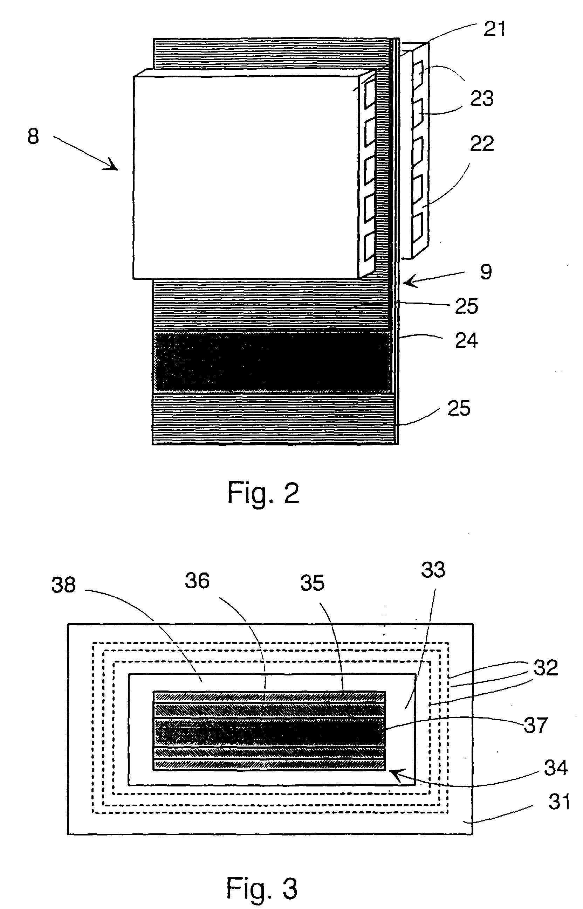

Fig. 2 illustrates the structural principle of the linear motor of the invention. The stator, which in the elevator application presented in fig. 1 is placed in the counter-weight, consists of two parallel plate-shaped halves 21 and 22 placed at a distance from each other. The frame of the primary winding is composed of sheets to form the magnetic circuit of the motor, and it is provided with grooves 23 oriented in a direction perpendicular to the travel direction of the motor, the primary windings being placed in these grooves. Between the two halves of the primary side is the secondary component 9 of the motor, a band-shaped element extending in its lengthwise direction outside the primary part. The width of the band 9 is substantially of the same order with that of the stator core packet of stampings. The band consists of a mesh or fabric 24 forming a supporting structure, made e.g. of glass fibre or steel wire. Attached to either side of the supporting structure is a conducting plexus 25 made of aluminium or copper, forming the secondary winding of the motor. The secondary winding can also be made from conducting rods connected together at their ends to form a short-circuit winding. The primary and secondary parts are separated by an air gap. The structure formed by the supporting structure and the winding is flexible in the lengthwise direction, whereas in its widthwise direction it is substantially straight and inflexible.

Fig. 3 presents a diagram representing another embodiment of the invention. In this case, the primary part of the motor consists of an annular iron core 31 in which the primary winding 32 is so fitted that it encircles the opening 33 formed inside the core. The winding is annular, so no end connections are needed. Fitted inside the primary part is a band-shaped secondary part 34 which consists of several layers and is movable relative to the primary part, an air gap 38 being provided between the primary and secondary parts. The secondary winding of the linear motor consists of conducting aluminium bars 35 forming the outer layers of the secondary part, facing the primary winding. The bars are connected together at their ends to form a short-circuit winding. On either side of the band-shaped secondary part, under the aluminium bars, are steel bars 36 forming the iron part of the magnetic circuit of the secondary component of the motor. Between the steel bars, in the middle of the secondary band, is a mesh or fabric 37 which constitutes the supporting structure of the band and is saturated e.g. with rubber to isolate the magnetic circuits of the two halves of the secndary part from each other.

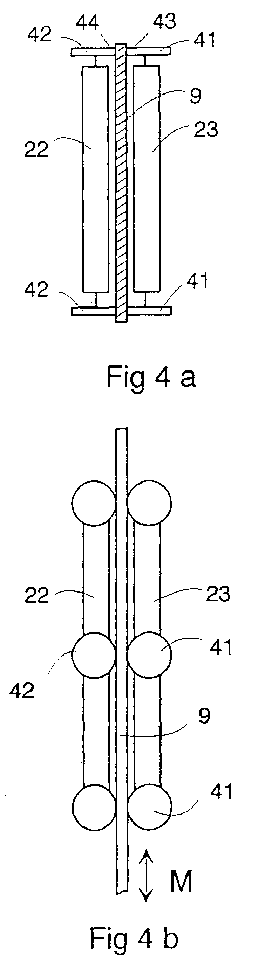

Fig. 4 illustrates an arrangement designed to maintain a constant air gap between the primary and secondary parts of the linear motor in the motor structure presented in fig. 2. In fig. 4a), the motor is depicted in top view and in fig. 4b) in lateral view, as seen from the direction of the plane of the secondary part. Attached to the two halves 22 and 23 of the primary part are roller guides 41 and 42 which rotate on their axles, rolling along the level surfaces 43 and 44 of the secondary part. The secondary band has been made somewhat wider than the secondary winding itself, the edges being made of a material resistant to the wear caused by the roller guides. Alternatively, the edges of the band are coated with wear-resistant material in the areas receiving the pressure of the roller guides. A corresponding guide structure is also used in connection with the embodiment in fig. 3 to maintain a constant air gap between the primary and secondary parts. In a preferable case, the motor is only provided with roller guides placed at the ends of the primary part of the motor.

The invention has been described above by the aid of one of its embodiments. However, the presentation is not to be regarded as a limitation, but instead the sphere of protection of the invention may vary freely within the limits defined by the following claims.

## Claims

1. Elevator operated by a linear motor, comprising an elevator car (1) and a counterweight (5) linked together with a hoisting rope (2) passing over a deflecting pulley (4), the elevator being suspended on the hoisting rope and moved in the elevator shaft by means of it, and guide rails (6,7) for guiding the elevator car and counterweight in the elevator shaft, in which elevator the primary circuit of the linear motor, including the primary frame (21,22;31) and winding (22;32), is fitted in the counterweight (5), while the secondary structure (9) of the linear motor is fitted in the elevator shaft in the lengthwise direction of the shaft, the primary and secondary structures being separated by an air gap (38), characterized in that the secondary part (9) of the motor is provided with a supporting structure (24;37) which is flexible in the lengthwise direction and strong against tension and to which the conductors (25;35) of the secondary winding are attached.

2. Elevator according to claim 1, characterized in that the supporting structure of the secondary part (9) is coated with an insulating material, such as rubber.

3. Elevator according to claim 1 or 2, characterized in that the secondary conductors (25;35) are bars oriented in a direction perpendicular to the travel direction of the motor, said bars being connected together by their ends.

4. Elevator according to one of the foregoing claims, characterized in that the secondary part (9) is a band-shaped structure extending substantially in one piece over the entire length of the shaft and secured by means of fixing elements (10) at the upper and lower ends of the shaft.

5. Elevator according to one of the foregoing claims, characterized in that the counterweight (5) is arranged to surround the secondary structure (9).

6. Elevator according to one of the foregoing claims, characterized in that the counterweight (5) is arranged to move on that side of the secondary structure (9) which faces to the elevator shaft.

7. Elevator according to one of the foregoing claims, characterized in that the counterweight is provided with guides (41,42) designed to maintain a constant air gap (38) between the primary (8) and secondary (9) structures of the linear motor.

## Patentansprüche

1. Durch einen Linearmotor angetriebener Aufzug mit einer Aufzugskabine (1) und einem Gegengewicht (5), die mit einem Hubseil (2) verbunden sind, das über eine Umlenkrolle (4) läuft, wobei der Aufzug am Hubseil aufgehängt und durch dieses im Aufzugsschacht bewegt wird, und Führungsschienen (6, 7) für die Führung der Aufzugskabine und des Gegengewichts im Aufzugsschacht, wobei im Aufzug die Primärschaltung des Linearmotors, einschließlich des Primärrahmens (21, 22; 31) und der Windung (22; 32) im Gegengewicht (5) befestigt ist, während die Sekundärstruktur (9) des Linearmotors im Aufzugschacht in Längsrichtung des Schachtes befestigt ist, wobei die Primär- und Sekundärstrukturen durch einen Luftspalt (38) getrennt sind, dadurch gekennzeichnet, daß der Sekundärteil (9) des Motors mit einer Trägerstruktur (24; 37) versehen ist, die in Längsrichtung flexibel und widerstandsfähig gegen Zug ist und an der die Leiter (25; 32) der Sekundärwindung befestigt sind.

2. Aufzug nach Anspruch 1, dadurch gekennzeichnet, daß die Trägerstruktur des Sekundärteils (9) mit einem Isoliermaterial, wie Kautschuk, beschichtet ist.

3. Aufzug nach Anspruch 1 oder 2, dadurch gekennzeichnet, daß die Sekundärleiter (25;35) Stangen sind, die in einer Richtung rechtwinklig zur Bewegungsrichtung des Motors ausgerichtet sind, wobei die Stangen an ihren Enden miteinander verbunden sind.

4. Aufzug nach einem der vorangehenden Ansprüche, dadurch gekennzeichnet, daß der Sekundärteil (9) eine bandförmige Struktur ist, die sich im wesentlichen in einem Stück über die gesamte Länge des Schachtes erstreckt und mit Befestigungselementen (10) am oberen und unteren Ende des Schachtes befestigt ist.

5. Aufzug nach einem der vorangehenden Ansprüche, dadurch gekennzeichnet, daß das Gegengewicht (5) so angeordnet ist, daß es die Sekundärstruktur (9) umgibt.

6. Aufzug nach einem der vorhergehenden Ansprüche, dadurch gekennzeichnet, daß das Gegengewicht (5) so angeordnet ist, daß es sich auf der Seite der Sekundärstruktur (9) bewegen kann, die zum Aufzugsschacht weist.

7. Aufzug nach einem der vorhergehenden Ansprüche, dadurch gekennzeichnet, daß das Gegengewicht mit Führungen (41, 42) versehen ist, die so ausgestaltet sind, daß sie einen konstanten Luftspalt (38) zwischen den Primär- (8) und Sekundärstrukturen (9) des Linearmotors aufrecht erhalten.

## Revendications

1. Ascenseur propulsé par un moteur linéaire, comprenant une cabine d'ascenseur (1) et un contrepoids (5) reliés l'un à l'autre par un câble de levage (2) passant sur une poulie de renvoi (4), l'ascenseur étant suspendu au câble de levage et déplacé dans la cage d'ascenseur par celui-ci, et des rails de guidage (6,7) pour guider la cabine d' ascenseur et le contrepoids dans la cage d'ascenseur, le circuit primaire du moteur linéaire dudit ascenseur, comportant la carcasse primaire (21,22; 31) et l'enroulement primaire (22;32), étant logé dans le contrepoids (5) tandis que la structure secondaire (9) du moteur linéaire est montée dans la cage d'ascenseur dans la direction longitudinale de la cage, les structures primaire et secondaire étant séparées par un entrefer (38), caractérisé en ce que la partie secondaire (9) du moteur est prévue avec une structure de support (24,37) qui est flexible dans la direction longitudinale et qui résiste en traction et à laquelle les conducteurs (25;35) de l'enroulement secondaire sont attachés.

2. Ascenseur suivant la revendication 1, caractérisé en ce que la structure de support de la partie secondaire (9) est revêtue d'une matière isolante, telle que du caoutchouc.

3. Ascenseur suivant la revendication 1 ou 2, caractérisé en ce que les conducteurs secondaires (25;35) sont des barres orientées dans une direction perpendiculaires à la direction de déplacement du moteur, lesdites barres étant connectées les unes aux autres par leurs extrémités.

4. Ascenseur suivant une des revendications précédentes, caractérisé en ce que la partie secondaire (9) est une structure en forme de bande s'étendant sensiblement en un seul élément sur toute la longueur de la cage et fixée par des éléments de fixation (10) aux extrémités supérieure et inférieure de la cage.

5. Ascenseur suivant une quelconque des revendications précédentes, caractérisé en ce que le contrepoids (5) est agencé de manière à entourer la structure secondaire (9).

6. Ascenseur suivant une quelconque des revendications précédentes, caractérisé en ce que le contrepoids (5) est agencé de manière à se déplacer sur le côté de la structure secondaire (9) qui fait face à la cage d'ascenseur.

7. Ascenseur suivant une quelconque des revendications précédentes, caractérisé en ce que le contrepoids est pourvu de guidages (41,42) conçus pour maintenir un entrefer constant (38) entre les structures primaire (8) et secondaire (9) du moteur linéaire.
